(19) Europäisches Patentamt
European Patent Office
Office européen des brevets

(11) **EP 2 220 173 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(51) Int Cl.:
*C09C 1/56* *(2006.01)* *B01J 8/24* *(2006.01)*
*B01J 8/18* *(2006.01)*

(21) Anmeldenummer: **08858763.9**

(22) Anmeldetag: **19.11.2008**

(86) Internationale Anmeldenummer:
**PCT/EP2008/065831**

(87) Internationale Veröffentlichungsnummer:
**WO 2009/074435 (18.06.2009 Gazette 2009/25)**

(54) **VERFAHREN ZUR NACHBEHANDLUNG VON RUSS**

METHOD FOR POST-TREATING CARBON BLACK

PROCÉDÉ DE POST-TRAITEMENT DU NOIR DE CARBONE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.12.2007 DE 102007060307**

(43) Veröffentlichungstag der Anmeldung:
**25.08.2010 Patentblatt 2010/34**

(73) Patentinhaber: **Orion Engineered Carbons GmbH 60528 Frankfurt am Main (DE)**

(72) Erfinder:
• **STENGER, Frank**
**63755 Alzenau (DE)**
• **BERGEMANN, Klaus**
**50170 Kerpen-Sindorf (DE)**
• **NAGEL, Manfred**
**63477 Maintal (DE)**

(74) Vertreter: **f & e patent**
**Fleischer, Engels & Partner mbB, Patentanwälte**
**Braunsberger Feld 29**
**51429 Bergisch Gladbach (DE)**

(56) Entgegenhaltungen:
**EP-A- 0 176 707     EP-A- 1 347 018**

**Beschreibung**

Die Erfindung bettrift ein Verfahren zur Nachbehandlung von Ruß.

Industrieruße können in Fahrzeugreifen, technischen Gummiartikeln, Lacken, Tonern, Druckfarben, Kunststoffen, Tinten und auf vielen weiteren Gebieten eingesetzt werden. Insbesondere bei Verwendung von Ruß als Pigment werden durch eine Nachbehandlung des Rußes bestimmte Merkmale verbessert.

Eine Nachbehandlung des Rußes kann beispielsweise eine Oxidation (JP 2000248196), eine Oberflächenbelegung mit chemischen Gruppen (JP 09067528, DE 10242875, EP 655516 B1, JP 09124312), eine Trocknung (CN 1858531), eine Extraktion (DE 3118907, JP 2000-290529), eine Aktivierung durch Temperatur oder reaktive Gase (TW 394749 B, WO 2005/028978), ein CVD-Prozess (Adv. Mater. 12(3) (2000), 16 - 20), eine Vermischung mit anderen Pulvern, eine Vermahlung (DE 200700373) und ähnliches umfassen.

Die Nachbehandlung von Ruß kann in unterschiedlichsten Apparaten und nach verschiedensten Methoden erfolgen. Beispielsweise kann die Nachbehandlung durch Reaktion des Rußes mit einer Flüssigkeit (EP 982379, JP 2000248118), einem Feststoff (EP 1134261 A2) oder einem Gas (JP 05078110 A) erfolgen.
Die Nachbehandlung kann in den Herstellungsprozess integriert sein, indem reaktive Stoffe in die Filter, die Transportwege (JP 2000248196) oder die Verperlung (US 4075160) gegeben werden.
Die Nachbehandlung kann auch in separaten Apparaten erfolgen.

Eine Methode zur Nachbehandlung von Ruß ist der Einsatz von Wirbelschichten (GB 895990). Die Wirbelschicht ermöglicht beispielsweise einen sehr intensiven Kontakt des Rußes mit gasförmigen Komponenten, kann zusätzlich gekühlt oder geheizt werden, wird intensiv durchmischt und kann sowohl batchweise als auch kontinuierlich betrieben werden.

Die Erzeugung von Wirbelschichten mit Ruß ist auf Ruße beschränkt, die aufgrund ihrer speziellen Eigenschaften, wie zum Beispiel Schüttdichte, Oberfläche, Struktur oder Primärteilchengröße, sich leicht aufwirbeln (fluidisieren) lassen.

Viele Furnaceruße, und besonders grobteilige Furnaceruße, bilden keine stabilen Wirbelschichten aus. Sie bilden zum Beispiel oft Kanäle, durch die das Traggas strömt. Deshalb werden oft für Furnaceruße andere Technologien zur Nachbehandlung eingesetzt (JP 07-258578, JP 2001-040240), unter anderem durch Reaktion in einem Reaktor mit vorgeschalteter Mahlung (JP 2004-075985).

Aus EP 1347018 ist ein Verfahren zur Herstellung von nachbehandeltem Ruß bekannt, wobei der Ruß in einer Wirbelschicht unter Zusatz von Fluidisierungsmittel fluidisiert und mit einem Nachbehandlungsmittel in Kontakt gebracht wird.

Ferner ist aus DE 3041188 bekannt, ein Rußbett zu rühren, während der Ruß mit Gasen behandelt wird.

Weiter ist bekannt, die Aufwirbelung von Partikeln durch Vibration (JP 03124772) oder äußere Felder (WO 2005022667) zu verbessern.

Es ist bekannt die Fluidisierung durch Zumischung von Gasen mit besonders geringem Molekulargewicht zu verbessern (WO 00/009254).

Ferner ist bekannt, dass Fluidisierungsprobleme mittels Pulsation des Gasstromes teilweise überwunden werden können (Wang, Chemical Engineering Science 60 (2005) 5177 - 5181).

Darüber hinaus ist aus WO 2005/028978 eine Wirbelschicht bekannt, in der ein Gasstrom waagerecht in die Wirbelschicht geleitet wird, um feine Partikeln ausreichend zu fluidisieren.

Ferner ist bekannt, dass durch den Einbau und Betrieb waagerechter (in Bezug auf die Fluidisierungsströmung) Hochgeschwindigkeitsdüsen, Agglomerate in einer Wirbelschicht zerstört und Partikeln zerkleinert werden können (Mc-Millan, Powder Technology, 175 (2007), 133 - 141).

Es ist bekannt, Nanopartikel in fluidisiertem Zustand zu beschichten oder zur Reaktion zu bringen, wenn die Fluidisierung der Nanopartikel, mit Aggregatgrößen im Bereich 50 - 1000 $\mu$m, durch äußere Felder vorher ermöglicht wurde (WO 05/022667).

Aus EP0176707 ist ein Verfahren zur mehrstufigen Behandlung feinteiliger Feststoffe bekannt, bei dem die einzelnen Behandlungsgase in verschiedenen Zonen der Behandlungstrecke zugeführt werden.

Nachteil der bekannten Verfahren ist die oft eingeschränkte Möglichkeit zur Nachbehandlung von Ruß aufgrund unzureichender Fluidisierung, die Verunreinigung des Rußes bei Verwendung eines zusätzlichen Fluidisierungsmittels, der technische Aufwand, vor allem hinsichtlich gasdichter Anlagen bei Verwendung von Rührern und Vibrationserzeugern, die begrenzte Anwendbarkeit äußerer Felder auf elektrisch ungeladene oder nicht-magnetische Teilchen, teilweise die Bildung von unerwünschten Granulaten beziehungsweise anderen Kompaktierungen mit Rührern.

Aufgabe der Erfindung ist es, ein Nachbehandlungsverfahren zur Verfügung zu stellen, bei dem Ruße, auch solche die normalerweise keine stabile Wirbelschicht bilden, ohne Rührer, Fluidisierungsmittel und/oder äußere Felder in stabile Wirbelschichten gebracht und in dieser nachbehandelt werden können.

Gegenstand der Erfindung ist ein Verfahren zur Nachbehandlung von Rußen, welches dadurch gekennzeichnet ist, dass man den Ruß in einer Wirbelschichtapparatur im unteren Bereich der Apparatur mit einem Traggas anströmt, einen zusätzlichen Gasstrom in die Wirbelschichtapparatur einleitet und den Ruß in der entstehenden Wirbelschicht nachbehandelt, wobei der zusätzliche Gasstrom in einem Winkel von 91° bis 180° zur Richtung des Hauptgasstromes der Wirbelschicht eingeleitet wird und kein Fluidisierungsmittel eingesetzt wird.

Bei der Nachbehandlung von Rußen in einer Wirbelschicht wird der Ruß durch einen Traggasstrom im unteren Bereich der Apparatur angeströmt. Die Wirbelschichten können aus Teilchen bestehen, die durch einen Gasstrom in einen fluiden Zustand versetzt werden, indem sie mit Gasen angeströmt und aufgewirbelt werden. Vorzugsweise können die Auftriebskräfte des Gases und die Gewichtskräfte der Teilchen sich nahezu das Gleichgewicht halten, sodass die Wirbelschicht eine definierte Oberkante hat. Wirbelschichten können aber auch so betrieben werden, dass nach oben ausgetragene Teilchen an einem Filter, Zyklon oder anderem geeigneten Abscheider abgeschieden und in das Wirbelbett zurückgeführt werden. Die Wirbelschichten können auch als Fließbett betrieben werden.

Für die Nachbehandlung kann eine Reaktivkomponente in die Wirbelschicht geleitet werden.

Die Reaktivkomponente kann mit dem Traggas vermischt oder aber separat zugeleitet werden.

Die Zuführung des Traggasstromes kann über einen entsprechend gasdurchlässigen Boden, zum Beispiel aus Sintermetall, Kunststoffgeflecht, Böden mit Schrauben oder Conidurböden, über Düsen oder über tangentiale Einströmöffnungen im unteren Bereich der Apparatur erfolgen.

Als Traggas kann man beispielsweise Luft, Stickstoff, Argon oder Abgase aus Verbrennungsprozessen einsetzen.

Das Traggas kann eine Temperatur von -20 bis 500°C, vorzugsweise von 10 bis 400°C, haben.

Erfindungsgemäß kann der zusätzliche Gasstrom die gleiche oder unterschiedliche Zusammensetzung wie das Traggas haben.

Der zusätzliche Gasstrom kann eine gasförmige Reaktivkomponente, ein inertes Gas oder Mischungen hieraus sein. Als inertes Gas kann Stickstoff, Kohlendioxid oder Argon eingesetzt werden. Als gasförmige Reaktivkomponente kann beispielsweise Wasserstoff, Sauerstoff, Halogene, Stickoxide, Silane, Ameisensäure, Schwefeloxide und verdampfte Flüssigkeiten eingesetzt werden. Die gasförmige Reaktivkomponente kann gleichzeitig zur Nachbehandlung des Rußes dienen.

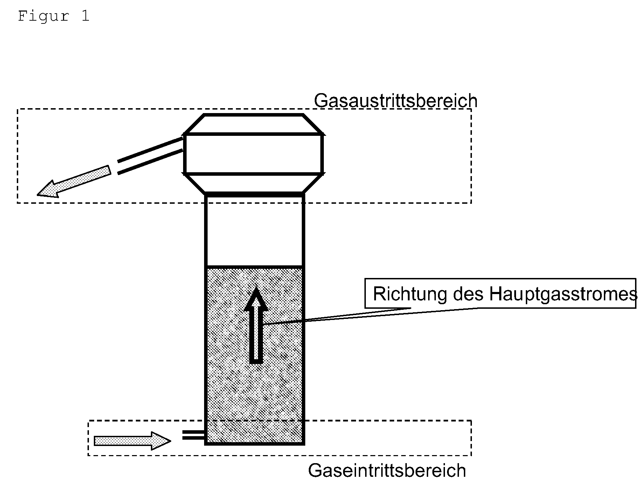

Der zusätzliche Gasstrom kann vorzugsweise in einem Winkel von 120° bis 180°, besonders bevorzugt 160° bis 180°, ganz besonders bevorzugt 180°, zur Richtung des Hauptgasstromes der Wirbelschicht eingeleitet werden. Die Richtung des Hauptgasstromes der Wirbelschicht ist von dem Eintrittsbereich des Traggases zum Austrittsbereich gerichtet. Figur 1 zeigt ein mögliches Beispiel für die Ausführung einer Wirbelschichtapparatur und erläutert daran die Richtung des Hauptgasstromes.

Der zusätzliche Gasstrom kann eine Temperatur von -20 bis 500°C, vorzugsweise von 10 bis 400°C, haben.

Der zusätzliche Gasstrom kann 5 bis 60 Vol-%, vorzugsweise 25 - 35 Vol-%, des Gesamtgasstromes im Wirbelbett sein.

Der eingeleitete zusätzliche Gasstrom kann gepulst sein. Die Pulsung kann halbsinusförmig, rechteckförmig oder dreieckförmig erfolgen. Die Pulsdauer kann 0,1 s bis 1 h, vorzugsweise 1 s bis 15 min, besonders bevorzugt 10 s bis 1 min, betragen. Die Zwischenpulszeit kann 0,1 s bis 1 h, vorzugsweise 1 s bis 15 min, besonders bevorzugt 10 s bis 1 min, betragen.

Der zusätzliche Gasstrom kann zentrisch oder exzentrisch eingeleitet werden.

Der zusätzliche Gasstrom kann durch Düsen eingeleitet werden. Als Düsen für den zusätzlichen Gasstrom können Düsen mit Öffnungswinkeln zwischen 0° und 140°, vorzugsweise zwischen 0° und 90°, eingesetzt werden. Die eingesetzten Durchmesser der Düsenöffnungen können zwischen 0,05 mm und 5 mm, bevorzugt zwischen 0,07 mm und 1 mm, und besonders bevorzugt zwischen 0,1 mm und 0,75 mm, variieren.

Als Düsen können Ein- oder Mehrstoffdüsen eingesetzt werden.

Als Düsen können Vollkegel-, Hohlkegel-, Flachstrahl- und Glattstrahldüsen eingesetzt werden.

Die Düsen können in das Rußbett unterschiedlich tief eintauchen. Der Abstand der Düsen über dem Boden, durch den das Traggas einströmt, kann zwischen 2 und 1500 mm variieren. Der Abstand der Düsen über dem Boden, durch den das Traggas einströmt, kann zwischen 5% und 120% des Reaktordurchmessers betragen.

Der eingeleitete zusätzliche Gasstrom kann auf mehrere Austrittsstellen verteilt sein.

Der zusätzliche Gasstrom kann vorzugsweise der Richtung des Hauptgasstromes der Wirbelschicht entgegengerichtet sein. Sowohl Traggas als vor allem auch der zusätzliche Gasstrom können auch so ausgerichtet werden, dass sich zum Beispiel ein Drall, eine Rückströmung oder eine scherende Strömung ergeben.

Über die Menge des zusätzlichen Gasstromes kann für schwer fluidisierbare Ruße die Ausbildung des vollständigen Wirbelbettes eingestellt werden. Ein Abschalten des zusätzlichen Gasstromes kann ein Zusammenfall des Wirbelbettes bewirken.

Als Ruß können Furnaceruß, Gasruß, Channelruß, Flammruß, Thermalruß, Acetylenruß, Plasmaruß, Inversionsruß, bekannt aus DE 195 21 565, Si-haltiger Ruß, bekannt aus WO 98/45361 oder DE 19613796, oder metallhaltiger Ruß, bekannt aus WO 98/42778, Lichtbogenruß und Ruße, die Nebenprodukte chemischer Produktionsprozesse sind, eingesetzt werden. Der Ruß kann durch vorgelagerte Reaktionen modifiziert sein.

Es können Ruße, die als Verstärkerfüllstoff in Kautschukmischungen verwendet werden, eingesetzt werden.

Es können Farbruße eingesetzt werden.

Weitere Ruße können sein: Leitfähigkeitsruß, Ruß zur UV-Stabilisierung, Ruß als Füllstoff in anderen Systemen als Kautschuk, wie zum Beispiel in Bitumen, Kunststoff, Ruß als Reduktionsmittel, in der Metallurgie.

Vorzugsweise kann als Ruß ein Furnace- oder Gasruß, in besonderem Maße für die Erfindung bevorzugt ein Furnaceruß eingesetzt werden.

Der Ruß kann einen DBP-Wert (ASTM D 2414) zwischen 30 und 425 ml/100g, bevorzugt zwischen 35 und 250 ml/100g, besonders bevorzugt zwischen 40 und 150 ml/100g, ganz besonders bevorzugt zwischen 45 und 110 ml/100g, haben.

Der Ruß kann eine BET-Oberfläche (ASTM D 4820) zwischen 20 und 1200 $m^2$/g, bevorzugt zwischen 22 und 600 $m^2$/g, besonders bevorzugt zwischen 29 und 300 $m^2$/g, ganz besonders bevorzugt zwischen 30 und 150 $m^2$/g, haben. Der Ruß kann eine mittlere Aggregatgröße von 20 nm bis 2000 nm, vorzugsweise von 22 nm bis 620 nm, besonders bevorzugt von 40 nm bis 300 nm, aufweisen.

Die Aggregatgrößen werden im Zuge einer Messung der Aggregatgrößenverteilung bestimmt. Die Aggregatgrößenverteilung wird nach der Norm ISO 15825, first edition, 2004-11-01, bestimmt, wobei folgende Modifikationen angewendet werden:

Ergänzung in Absatz 4.6.3 der Norm ISO 15825: Der mode bezieht sich auf die Massenverteilungskurve (mass distribution curve).

Ergänzung in Absatz 5.1 der Norm ISO 15825: Es wird das Gerät BI-DCP Particle Sizer und die zugehörige Auswertesoftware dcplw32, Version 3.81, verwendet, alles erhältlich bei der Firma Brookhaven Instruments Corporation, 750 Blue Point Rd., Holtsville, NY, 11742.

Ergänzung zu Absatz 5.2 der Norm ISO 15825: Es wird das Ultraschall-Steuergerät GM2200, der Schallwandler UW2200, sowie die Sonotrode DH13G verwendet. Ultraschall Steuergerät, Schallwandler und Sonotrode sind erhältlich bei der Firma Bandelin electronic GmbH & Co. KG, Heinrichstraße 3-4, D-12207 Berlin. Dabei werden am Ultraschall-Steuergerät folgende Werte eingestellt: Power % = 50, Cycle = 8. Dies entspricht einer eingestellten Nennleistung von 100 Watt und einem eingestellten Puls von 80%.

Ergänzung zu Absatz 5.2.1 der Norm ISO 15825: Die Ultraschallzeit wird auf 4,5 Minuten festgelegt.

Abweichend zu der im Absatz 6.3 der Norm ISO 15825 angegebenen Definition wird "Surfactant" wie folgt definiert: "Surfactant" ist ein anionisches Tensid vom Typ Nonidet P 40 Substitute von der Firma Fluka, erhältlich bei Sigma-Aldrich Chemie GmbH, Industriestrasse 25, CH-9471 Buchs SG, Switzerland.

Abweichend zu der im Absatz 6.5 der Norm ISO 15825 angegebenen Definition der Spinflüssigkeit ist die Spinflüssigkeit wie folgt definiert: Zur Herstellung der Spinflüssigkeit werden 0,25 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Spinflüssigkeit darf nach deren Herstellung höchstens 1 Woche verwendet werden.

Abweichend zu der im Absatz 6.6 der Norm ISO 15825 angegebenen Definition der Dispersionsflüssigkeit ist die Dispersionsflüssigkeit wie folgt definiert: Zur Herstellung der Dispersionsflüssigkeit werden 200 ml Ethanol (Absatz 6.2), und 0,5 g Tensid Nonidet P 40 Substitute von Fluka (Absatz 6.3) mit demineralisiertem Wasser (Absatz 6.1) auf 1000 ml aufgefüllt. Anschließend wird der pH-Wert der Lösung mit 0,1 mol/l NaOH-Lösung auf 9-10 eingestellt. Die Dispersionsflüssigkeit darf nach deren Herstellung höchstens 1 Woche verwendet werden.

Für besonders schwer dispergierbare Ruße werden abweichend von obiger Vorschrift 2,5 g Tensid eingesetzt.

Ergänzung zu Absatz 9 der Norm ISO 15825: Der Wert für die einzutragende Dichte von Ruß beträgt 1,86 g/$cm^3$. Die Temperatur für die einzutragende Temperatur wird gemäß Absatz 10.11 bestimmt. Für den Typ der Spinflüssigkeit wird die Option "Aqueous" ausgewählt. Damit ergibt sich für die Dichte der Spinflüssigkeit ein Wert von 0,997 (g/cc), und für die Viskosität der Spinflüssigkeit ein Wert von 0,917 (cP). Die Lichtstreukorrektur erfolgt mit den in der Software dcplw 32 anwählbaren Optionen: Datei = carbon.prm; Mie-Correction.

Ergänzung zu Absatz 10.1 der Norm ISO 15825: Die Zentrifugengeschwindigkeit ist auf 11000 r/min festgelegt. Ergänzung zu Absatz 10.2 der Norm ISO 15825: Anstatt 0,2 $cm^3$ Ethanol (Absatz 6.2) werden 0,85 $cm^3$ Ethanol (Absatz 6.2) injiziert.

Ergänzung zu Absatz 10.3 der Norm ISO 15825: Es werden exakt 15 $cm^3$ Spinflüssigkeit (Absatz 6.5) injiziert. Anschließend werden 0,15 $cm^3$ Ethanol (Absatz 6.2) injiziert.

Die Anweisung Absatz 10.4 der Norm ISO 15825 entfällt komplett.

Ergänzung zu Absatz 10.7 der Norm ISO 15825: Unmittelbar nach dem Start der Datenaufzeichnung überschichtet man die Spinflüssigkeit in der Zentrifuge mit 0,1 $cm^3$ Dodecan (Absatz 6.4).

Ergänzung zu Absatz 10.10 der Norm ISO 15825: Für den Fall, dass die Messkurve die Basislinie nicht binnen einer Stunde wieder erreicht, wird die Messung solange geführt, bis die Messkurve die Basislinie wieder erreicht. Läuft jedoch die Messkurve dicht an der Basislinie parallel zur Basislinie wird die Messung nach 10 Minuten mit parallelem Verlauf von Messkurve und Basislinie beendet.

Ergänzung zu Absatz 10.11 der Norm ISO 15825: Anstelle der in der Anweisung beschriebenen Methode zur Ermittlung der Messtemperatur wird die Messtemperatur T, welche in das Computerprogramm einzutragen ist, wie folgt ermittelt:

$$T = 2/3 \; (Te - Ta) + Ta,$$

wobei Ta die Temperatur der Messkammer vor der Messung und Te die Temperatur der Messkammer nach der Messung bezeichnet. Die Temperaturdifferenz sollte 4° C nicht übersteigen.

Der Ruß kann vorverdichtet sein. Die Schüttdichte (DIN 53600) des Rußes kann dabei zwischen 0,03 und 1 kg/l, bevorzugt zwischen 0,05 und 0,5 kg/l, variieren.

Der Ruß kann granuliert sein. Der granulierte Ruß kann nass-, trocken-, öl- und/oder wachsgranuliert sein.

Als Granulationsflüssigkeit können Wasser, Silane oder Kohlenwasserstoffe, beispielsweise Benzin oder Cyclohexan, mit oder ohne Zugabe von Bindemitteln, beispielsweise Melasse, Zucker, Ligninsulfonate sowie zahlreiche andere Stoffe alleine oder in Kombination miteinander, eingesetzt werden.

Das Granulat kann im Partikelgrößenbereich (ASTM D 1511) zwischen 0,1 $\mu$m und 5 mm, vorzugsweise zwischen 50 $\mu$m und 5 mm, vorliegen.

Als Ruß können auch Rußgemische eingesetzt werden.

Das erfindungsgemäße Verfahren kann ohne Vibrationsquelle durchgeführt werden.

Das erfindungsgemäße Verfahren kann ohne Rührer durchgeführt werden.

Das Nachbehandlungsmittel kann ein Oxidationsmittel, Trocknungsmittel oder Extraktionsmittel sein.

Als Oxidationsmittel kann Luft, Sauerstoff, Ozon, Stickoxide, Wasserstoffperoxid und anderen oxidierenden Gase oder Dämpfe eingesetzt werden.

Als Extraktionsmittel kann Luft, Inertgase, beispielsweise Stickstoff, Wasserdampf oder Luft/Wasserdampfgemische verwendet werden. Das Extraktionsmittel kann adsorbierte Verbindungen vom Ruß entfernen.

Das Nachbehandlungsmittel kann ein reaktives Gas, wie zum Beispiel Ammoniak, Schwefeltrioxid, Phosphan, Chlor oder Blausäure, sein.

Die Nachbehandlung kann eine Trocknung sein.

Die Trocknung kann durch vorgetrocknete Gase erfolgen. Die vorgetrockneten Gase können erwärmt sein. Die vorgetrockneten Gase können Luft, Stickstoff, Argon oder Verbrennungsabgase, beispielsweise verbranntes Tailgas aus dem Rußprozeß, sein.

Für die Trocknung kann die eingesetzte Apparatur extern beheizt sein.

Die Nachbehandlung kann eine Aktivierung der Oberfläche durch Temperatur oder eine Kombination aus Temperatur und zum Beispiel Wasserdampf sein.

Die Nachbehandlung kann eine chemische Gasphasenabscheidung (Chemical Vapor Deposition) darstellen, die in der Wirbelschicht erfolgt.

Das Nachbehandlungsmittel kann über den Traggasstrom, über den zusätzlichen Gasstrom oder über eine Kombination aus beiden in die Wirbelschicht eingeleitet werden. Das Nachbehandlungsmittel kann über eine zusätzliche Zuführungsstelle eingeleitet werden.

Die Nachbehandlung kann bei Temperaturen von 0°C bis 1200°C durchgeführt werden.

Wird als Nachbehandlungsmittel Ozon eingesetzt, kann die Temperatur vorzugsweise 10°C bis 100°C betragen.

Wird als Nachbehandlungsmittel NO$_x$ eingesetzt, kann die Temperatur vorzugsweise 100-300°C betragen.

Wird als Nachbehandlungsmittel Luft/Wasserdampf eingesetzt, kann die Temperatur vorzugsweise 300°C bis 600°C betragen. Wird als Nachbehandlungsmittel Wasserdampf eingesetzt, kann die Temperatur vorzugsweise 800-1100°C betragen.

Die mittlere Verweilzeit des Rußes in der

Wirbelschichtapparatur kann 1 Minute bis 10 Stunden, vorzugsweise 1 bis 5 Stunden, betragen. Die Menge an Nachbehandlungsmittel kann von 1 mg/g Ruß bis 10 g/g Ruß betragen.

Das Nachbehandlungsmittel kann vorgewärmt in die Wirbelschicht eingeleitet werden.

Die Wirbelschicht kann diskontinuierlich oder kontinuierlich betrieben werden.

Der mit dem erfindungsgemäßen Verfahren hergestellte Ruß kann anschließend mit zum Beispiel Luft oder Stickstoff ausgeblasen werden, um überschüssiges Nachbehandlungsmittel zu entfernen. Das Ausblasen kann in der Wirbelschicht oder außerhalb erfolgen. Die Ausblaszeiten können von 5 Minuten bis 10 h, vorzugsweise von 30 Minuten bis 2 h, betragen. Die Ausblastemperatur kann 20° bis 300°C, vorzugsweise 50° bis 200°C, betragen.

Die durch das erfindungsgemäße Verfahren hergestellten nachbehandelten Ruße können als Füllstoff,

Verstärkerfüllstoff, UV-Stabilisator, Leitfähigkeitsruß oder Pigment verwendet werden. Die durch das erfindungsgemäße Verfahren hergestellten nachbehandelten Ruße können in Kautschuk, Kunststoff, Druckfarben, Tinten, Inkjet-Tinten, Tonern, Lacken, Farben, Papier, Bitumen, Beton und anderen Baustoffen eingesetzt werden. Die durch das erfindungsgemäße Verfahren hergestellten nachbehandelten Ruße können als Reduktionsmittel in der Metallurgie angewendet werden.

Die durch das erfindungsgemäße Verfahren hergestellten nachbehandelten Ruße können vorzugsweise als Pigmentruße verwendet werden.

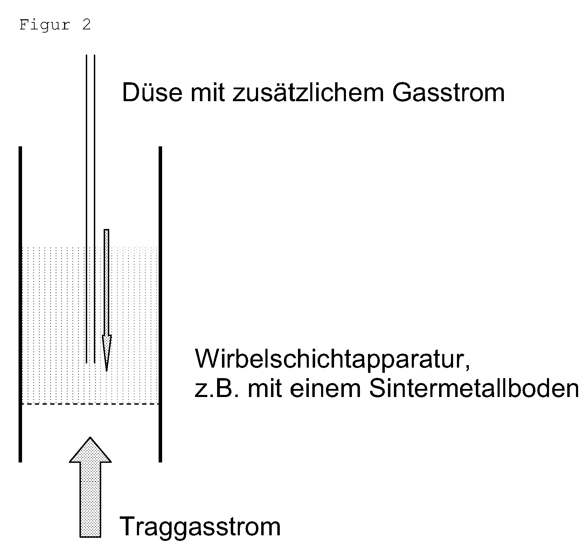

Figur 2 zeigt einen möglichen schematischen Aufbau einer Wirbelschichtapparatur.

Das erfindungsgemäße Verfahren hat den Vorteil, dass die schwer zu fluidiserenden Ruße, beispielsweise Furnaceruße, ohne Zusatz von Fluidisierungsmittel, Rührern, Vibrationseinheiten, äußeren Feldern oder ähnlichem in einer Wirbelschicht gut nachbehandelt werden können. Durch die Verwendung eines zusätzlichen Gasstromes kann eine stabile Wirbelschicht erhalten werden.

Beispiele

Für die Beispiele werden die in Tabelle 1 aufgeführten Ruße verwendet. Der Ruß A ist unter der Bezeichnung XPB 171, der Ruß B ist unter der Bezeichnung Printex 60 und der Ruß C ist unter der Bezeichnung Printex 55 bei der Firma Evonik Degussa GmbH erhältlich.

Tabelle 1

| Ruß | | Ruß A | Ruß B | Ruß C |
|---|---|---|---|---|
| BET(ASTM D4820) | m$^2$/g | 660 | 115 | 110 |
| DBP (ASTM 2414) | ml/100g | 102 | 114 | 46 |
| Flüchtige 950°C (DIN 53552) | Gew.-% | 2 | 1 | 0, 9 |
| pH-Wert (DIN ENISO 787-9) | | 7,5 | 10 | 9 |

Beispiel 1 (Vergleichsbeispiel)

600 g Ruß B werden in eine Wirbelschichtapparatur mit 15 cm Durchmesser und 150 cm Höhe eingefüllt. Die Schüttung ist 23 cm hoch. Der Ruß wird mit 500 bzw. 1000 l/h Luft über einen Sintermetallboden angeströmt. Es bildet sich keine stabile Wirbelschicht, stattdessen entstehen ein oder mehrere Kanäle im Rußbett, durch die die Luft strömt und Rußpartikel vulkanartig an einer Stelle hochschleudert. Eine homogene Nachbehandlung kann nicht stattfinden.

Beispiel 2

600 g Ruß B werden in eine Wirbelschichtapparatur mit 15 cm Durchmesser und 150 cm Höhe eingefüllt. Die Schüttung ist 23 cm hoch. Der Ruß hat eine Schüttdichte (DIN 53600) von 148 g/l. Der Ruß wird mit 500 l/h Luft über einen Sintermetallboden angeströmt. Zusätzlich werden 500 l/h Luft durch eine Düse eingeleitet, die sich mittig (entgegen der Richtung des Hauptgasstromes) und 11 cm über dem Sintermetallboden in der Schüttung befindet.

Es bildet sich eine stabile, manchmal leicht sprudelnde Wirbelschicht mit klar sichtbarer Begrenzung nach oben aus.

Die Rußschüttung expandiert von den ursprünglichen 23 cm Höhe zu einem Wirbelschicht von 123 cm Höhe.

Die verwendete Düse ist vom Typ Schlick 121.

Der eingefüllte Ruß hat einen Gehalt an Flüchtigen Bestandteilen bei 950°C von 1,1 %.

Die Wirbelschicht wird auf 150 °C durch eine elektrische Heizung erwärmt und dem zugeführten Traggas werden 30 l/h NO$_2$ zugegeben. Dadurch wird der Ruß oxidiert. Die Oxidation wird 70 Minuten lang durchgeführt. Zur Entfernung des restlichen NO$_2$ wird der Ruß nach der Oxidation 1 h lang ausgeblasen.

Während der Nachbehandlung, vor allem bei den erhöhten Temperaturen werden die Gasströme zeitweilig verringert, damit kein Ruß aus der Apparatur ausgetragen wird. Bei 180 °C werden nur noch 250 l/h Traggas und 150 l/h zusätzlicher Gasstrom benötigt.

Nach der Oxidation hat der Ruß eine Schüttdichte von 52 g/l und weist einen Oxidationsgrad von 3,6 % Flüchtige Bestandteile bei 950°C auf.

Beispiel 3 (Vergleichsbeispiel)

650 g eines Rußes A werden in eine Wirbelschichtapparatur mit 15 cm Durchmesser und 150 cm Höhe eingefüllt. Die Schüttung ist 41 cm hoch. Der Ruß wird mit 450 bzw. 900 l/h Luft über einen Sintermetallboden angeströmt. Es bildet sich keine stabile Wirbelschicht, stattdessen wird unregelmäßig Staub hochgerissen. Eine homogene Nachbehandlung kann nicht stattfinden.

Beispiel 4

650 g eines Rußes A werden in eine Wirbelschichtapparatur mit 15 cm Durchmesser und 150 cm Höhe eingefüllt. Die Schüttdichte beträgt 90 g/l. Die Schüttung ist 41 cm hoch. Der Ruß wird mit 450 l/h Luft über einen Sintermetallboden angeströmt. Zusätzlich werden 450 l/h Luft durch eine Düse eingeleitet, die sich mittig (entgegen der Richtung des Hauptgasstromes) und 11 cm über dem Boden in der Schüttung befindet.
Es bildet sich eine stabile Wirbelschicht mit glatter Oberfläche.
Die Rußschüttung expandiert von den ursprünglichen 41 cm Höhe zu einem Wirbelbett von 130 cm Höhe.
Die verwendete Düse ist vom Typ Schlick 121.
Der eingefüllte Ruß hat einen Gehalt an Flüchtigen Bestandteilen bei 950°C von 2%.
In 0,45 $m^3$/h des Gesamtgasstromes werden 50 g/$m^3$ Ozon erzeugt, das zur Oxidation des Rußes führt. Nach 6,5 h weist der Ruß einen Oxidationsgrad von 7,5% Flüchtige Bestandteile bei 950°C auf.
Mit zunehmender Reaktionsdauer erwärmt sich der Ruß, der Zusatzgasstrom kann zeitweilig bis auf 250 l/h reduziert werden.
Nach der Oxidation hat der Ruß eine Schüttdichte von 45 g/ l.
Beim Abschalten des Zusatzgasstromes (am Ende der Nachbehandlung), bricht die Fluidisierung des Rußes zusammen.

Beispiel 5 (Vergleichsbeispiel)

60 g Ruß C werden in eine Wirbelschichtapparatur mit 8 cm Durchmesser und 70 cm Höhe eingefüllt. Die Schüttung ist 10 cm hoch. Der Ruß wird mit 600 bzw. 900 l/h Luft über einen Kunststoffgeflechtboden angeströmt. Es bildet sich keine stabile Wirbelschicht, stattdessen entstehen ein oder mehrer Kanäle im Rußbett, durch die die Luft strömt und Rußpartikel vulkanartig an einer Stelle hochschleudert.

Beispiel 6

60 g Ruß C werden in eine Wirbelschichtapparatur mit 8 cm Durchmesser und 70 cm Höhe eingefüllt. Die Schüttung ist 10 cm hoch. Der Ruß wird mit 600 l/h getrockneter Luft über einen Kunststoffgeflechtboden angeströmt. Zusätzlich werden 300 l/h Luft durch eine Düse eingeleitet, die sich mittig (entgegen der Richtung des Hauptgasstromes) und 5 cm über dem Anströmboden in der Schüttung befindet. Es bildet sich eine stabile, manchmal leicht blubbernde Wirbelschicht mit klar sichtbarer Begrenzung nach oben aus. Die Rußschüttung expandiert von den ursprünglichen 10 cm Höhe zu einem Wirbelbett von 34 cm Höhe. Die verwendete Düse ist vom Typ Lechler 212 124.
Der Ruß hat anfänglich eine Feuchte (ASTM D 1509) von 1,6%. Er wird 24 h mit oben genannter Luft durchströmt und die Wirbelschichtapparatur von außen beheizt.
Nach der Trocknung hat der Ruß eine Feuchte von 0,7%.

**Patentansprüche**

1. Verfahren zur Nachbehandlung von Ruß, **dadurch gekennzeichnet, dass** man den Ruß in einer Wirbelschichtapparatur im unteren Bereich der Apparatur mit einem Traggas anströmt, einen zusätzlichen Gasstrom in die Wirbelschichtapparatur einleitet und den Ruß in der entstehenden Wirbelschicht nachbehandelt, wobei der zusätzliche Gasstrom in einem Winkel von 91° bis 180° zur Richtung des Hauptgasstromes der Wirbelschicht eingeleitet wird und kein Fluidisierungsmittel eingesetzt wird.

2. Verfahren zur Nachbehandlung von Ruß nach Anspruch 1, **dadurch gekennzeichnet, dass** man als Ruß Furnaceruß, Gasruß, Channelruß, Flammruß, Thermalruß, Acetylenruß, Plasmaruß, Si-haltiger Ruß, metallhaltiger Ruß, Lichtbogenruß oder Inversionsruß einsetzt.

3. Verfahren zur Nachbehandlung von Ruß nach Anspruch 1, **dadurch gekennzeichnet, dass** man keinen Rührer und keine Vibration einsetzt.

4. Verfahren zur Nachbehandlung von Ruß nach Anspruch 1 **dadurch gekennzeichnet, dass** man als Nachbehandlungsmittel ein Oxidationsmittel, Trocknungsmittel oder Extraktionsmittel einsetzt.

5. Verfahren zur Nachbehandlung von Ruß nach Anspruch 4, **dadurch gekennzeichnet, dass** man als Oxidationsmittel Ozon oder $NO_x$-haltige Gase einsetzt.

6. Verfahren zur Nachbehandlung von Ruß nach Anspruch 4, **dadurch gekennzeichnet, dass** man als Extraktionsmittel Luft oder Luft/Wasserdampfgemische einsetzt.

7. Verfahren zur Nachbehandlung von Ruß nach Anspruch 1, **dadurch gekennzeichnet, dass** man die Wirbelschicht kontinuierlich betreibt.

8. Verfahren zur Nachbehandlung von Ruß nach Anspruch 4, **dadurch gekennzeichnet, dass** man überschüssiges Nachbehandlungsmittel mit Luft oder Stickstoff ausbläst.

**Claims**

1. Process for aftertreating carbon black, **characterized in that** the carbon black is subjected to a carrier gas flow in a fluidized bed apparatus in the lower region of the apparatus, an additional gas stream is introduced into the fluidized bed apparatus, and the carbon black is aftertreated in the fluidized bed which arises, and the additional gas stream is introduced at an angle of 91 ° to 180° relative to the direction of the main gas flow of the fluidized bed and no fluidizing agent is used.

2. Process for aftertreating carbon black according to claim 1, **characterized in that** the carbon black used is furnace black, gas black, channel black, lamp black, thermal black, acetylene black, plasma black, Si-containing black, metal-containing black, light-arc black or inversion black.

3. Process for aftertreating carbon black according to claim 1, **characterized in that** no stirrer and no vibration are used.

4. Process for aftertreating carbon black according to claim 1, **characterized in that** the aftertreatment agent used is an oxidizing agent, desiccant or extractant.

5. Process for aftertreating carbon black according to claim 4, **characterized in that** the oxidizing agents used are ozone or $NO_x$-containing gases.

6. Process for aftertreating carbon black according to claim 4, **characterized in that** the extractants used are air or air/steam mixtures.

7. Process for aftertreating carbon black according to claim 1, **characterized in that** the fluidized bed is operated continuously.

8. Process for aftertreating carbon black according to claim 45, **characterized in that** excess aftertreatment agent is blown out with air or nitrogen.

**Revendications**

1. Procédé de post-traitement du noir de carbone, **caractérisé en ce que** l'on fait affluer le noir de carbone dans un appareil à lit fluidisé dans la zone inférieure de l'appareil à l'aide d'un gaz porteur, **en ce que** l'on achemine un flux de gaz supplémentaire à l'intérieur de l'appareil à lit fluidisé, et **en ce que** l'on traite ultérieurement le noir de carbone dans le lit fluidisé se formant,
sachant que le flux de gaz supplémentaire est acheminé selon un angle allant de 91° à 180° en direction du flux de gaz principal du lit fluidisé et qu'aucun agent de fluidisation n'est employé.

2. Procédé de post-traitement du noir de carbone selon la revendication 1, **caractérisé en ce que** l'on emploie comme noir de carbone du noir de carbone de four, du noir de carbone de gaz, du noir de carbone de canal, du noir de fumée, du noir thermique, du noir d'acétylène, du noir de plasma, du noir de carbone contenant du Si, du noir de carbone contenant du métal, du noir d'arc électrique ou du noir de carbone d'inversion.

3. Procédé de post-traitement de noir de carbone selon la revendication 1,
**caractérisé en ce que** l'on n'emploie aucun agitateur ni aucune vibration.

4. Procédé de post-traitement de noir de carbone selon la revendication 1,
**caractérisé en ce que** l'on emploie en tant qu'agent de post-traitement un agent d'oxydation, un agent de séchage ou un agent d'extraction.

5. Procédé de post-traitement de noir de carbone selon la revendication 4,
**caractérisé en ce que** l'on emploie comme agent d'oxydation de l'ozone ou des gaz contenant du $NO_x$.

6. Procédé de post-traitement de noir de carbone selon la revendication 4,
**caractérisé en ce que** l'on emploie en tant qu'agent d'extraction de l'air ou des mélanges d'air/de vapeur d'eau.

7. Procédé de post-traitement de noir de carbone selon la revendication 1
**caractérisé en ce que** l'on fait fonctionner le lit fluidisé en continu.

8. Procédé de post-traitement de noir de carbone selon la revendication 4,
**caractérisé en ce que** l'on fait gonfler l'agent de post-traitement en excédent avec de l'air ou de l'azote.

Figur 1

Gasaustrittsbereich

Richtung des Hauptgasstromes

Gaseintrittsbereich

Figur 2

Düse mit zusätzlichem Gasstrom

Wirbelschichtapparatur,
z.B. mit einem Sintermetallboden

Traggasstrom

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2000248196 B
- JP 09067528 B
- DE 10242875
- EP 655516 B1
- JP 09124312 B
- CN 1858531
- DE 3118907
- JP 2000290529 A
- TW 394749 B
- WO 2005028978 A
- DE 200700373
- EP 982379 A
- JP 2000248118 B
- EP 1134261 A2
- JP 05078110 A
- US 4075160 A

- GB 895990 A
- JP 7258578 A
- JP 2001040240 A
- JP 2004075985 A
- EP 1347018 A
- DE 3041188
- JP 03124772 B
- WO 2005022667 A
- WO 00009254 A
- WO 05022667 A
- EP 0176707 A
- DE 19521565
- WO 9845361 A
- DE 19613796
- WO 9842778 A

**In der Beschreibung aufgeführte Nicht-Patentliteratur**

- *Adv. Mater.,* 2000, vol. 12 (3), 16-20
- **WANG.** *Chemical Engineering Science,* 2005, vol. 60, 5177-5181

- **MCMILLAN.** *Powder Technology,* 2007, vol. 175, 133-141